# EUROPÄISCHE PATENTANMELDUNG

(11) **EP 3 208 935 A1**
(43) Veröffentlichungstag der Anmeldung: **23.08.2017**
(21) Anmeldenummer: 16155942.2
(22) Anmeldetag: 16.02.2016
(51) Int. Cl.: H02P 6/18, G01D 5/244, H02P 21/32, B60L 15/02

(54) **ZUVERLÄSSIGE PRÜFUNG EINES ELEKTRISCHEN ANTRIEBS**

(71) Anmelder: Siemens Aktiengesellschaft, 80333 München (DE)
(72) Erfinder: Sahhary, Bassel, Dr., 91058 Erlangen (DE); Walter, Andreas, 90411 Nürnberg (DE); Gerstner, Sebastian, 91301 Forchheim (DE); Köpken, Hans-Georg, Dr., 91056 Erlangen (DE); Wiedmann, Karsten, Dr., 91052 Erlangen (DE)

(57) **Zusammenfassung**

Ein elektrischer Antrieb (2) weist einen Umrichter (3) und eine über den Umrichter (3) gespeiste Synchronmaschine (4) auf. Eine Steuereinrichtung (6) des Umrichters (3) steuert Halbleiterventile (5) des Umrichters (3) gemäß einem ersten Ansteuerzustand (Z1) dynamisch an, so dass die Halbleiterventile (5) an eine Statorwicklung (9) der Synchronmaschine (4) elektrische Wechselspannungen (U1, U2, U3) eines Drehspannungssystems anlegen. Der erste Ansteuerzustand (Z1) ist derart bestimmt, dass ein Rotor (10) der Synchronmaschine (4) mit einer Basisdrehzahl (n0) rotiert. Die Steuereinrichtung (6) regelt sodann den von den Halbleiterventilen (5) abgegebenen Strom (I) unter Beibehaltung der Basisdrehzahl (n0) zu Null, ermittelt die angelegten Wechselspannungen (U1, U2, U3) und ermittelt daraus die Lage einer d-Achse des Rotors (10) und einer zur d-Achse des Rotors (10) elektrisch um 90° phasenversetzten q-Achse des Rotors (10). Sodann steuert die Steuereinrichtung (6) die Halbleiterventile (5) gemäß einem zweiten Ansteuerzustand (Z2) dynamisch an. Die Steuereinrichtung (6) berücksichtigt hierbei die Lage der zuvor ermittelten d-Achse und der zuvor ermittelten q-Achse des Rotors (10). Die durch diese Ansteuerung bewirkte Reaktion (R) des elektrischen Antriebs (2) wird erfasst und unter Berücksichtigung der bewirkten Reaktion (R) ein Qualitätsmaß (Q) für die ermittelte Lage der d-Achse und der q-Achse des Rotors (10) ermittelt.

## Beschreibung

Die vorliegende Erfindung geht aus von einem Prüfverfahren für einen elektrischen Antrieb, der einen Umrichter und eine über den Umrichter gespeiste Synchronmaschine aufweist,
- wobei eine Steuereinrichtung des Umrichters Halbleiterventile des Umrichters gemäß einem ersten Ansteuerzustand dynamisch ansteuert, so dass die Halbleiterventile an eine Statorwicklung der Synchronmaschine elektrische Wechselspannungen eines Drehspannungssystems anlegen,
- wobei der erste Ansteuerzustand derart bestimmt ist, dass ein Rotor der Synchronmaschine mit einer Basisdrehzahl rotiert,
- wobei die Steuereinrichtung sodann ausgehend vom ersten Ansteuerzustand den von den Halbleiterventilen an die Synchronmaschine abgegebenen Strom unter Beibehaltung der Basisdrehzahl zu Null regelt, die von den Halbleiterventilen an die Statorwicklung angelegten Wechselspannungen ermittelt und anhand der Wechselspannungen die Lage einer d-Achse des Rotors und einer zur d-Achse des Rotors elektrisch um 90° phasenversetzten q-Achse des Rotors ermittelt.

Die vorliegende Erfindung geht weiterhin aus von einem Steuerprogramm für eine Steuereinrichtung eines Halbleiterventile umfassenden Umrichters, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung automatisch
- die Halbleiterventile des Umrichters gemäß einem ersten Ansteuerzustand dynamisch ansteuert, so dass die Halbleiterventile an eine Statorwicklung der Synchronmaschine elektrische Wechselspannungen eines Drehspannungssystems anlegen, wobei der erste Ansteuerzustand derart bestimmt ist, dass ein Rotor der Synchronmaschine mit einer Basisdrehzahl rotiert,
- sodann ausgehend vom ersten Ansteuerzustand den von den Halbleiterventilen an die Synchronmaschine abgegebenen Strom unter Beibehaltung der Basisdrehzahl zu Null regelt, die von den Halbleiterventilen an die Statorwicklung angelegten Wechselspannungen ermittelt und anhand der Wechselspannungen die Lage einer d-Achse des Rotors und einer zur d-Achse des Rotors elektrisch um 90° phasenversetzten q-Achse des Rotors ermittelt.

Die vorliegende Erfindung geht weiterhin aus von einer Steuereinrichtung für einen Umrichter, wobei die Steuereinrichtung mit einem derartigen Computerprogramm programmiert ist.

Die vorliegende Erfindung geht weiterhin aus von einem Umrichter, wobei der Umrichter Halbleiterventile aufweist, von denen Wechselspannungen eines Drehspannungssystems an eine Synchronmaschine ausgegeben werden, wobei der Umrichter eine derartige Steuereinrichtung aufweist.

Die vorliegende Erfindung geht weiterhin aus von einem elektrischen Antrieb, wobei der Antrieb einen derartigen Umrichter und eine über den Umrichter gespeiste Synchronmaschine aufweist.

Die vorliegende Erfindung geht weiterhin aus von einem Elektrofahrzeug, das als Fahrantrieb mindestens einen derartigen elektrischen Antrieb aufweist.

Bei einer über einen Umrichter gespeisten Synchronmaschine bewirkt die Ansteuerung der Halbleiterventile des Umrichters, dass Wechselspannungen eines (in der Regel dreiphasigen) Drehspannungssystems an die Statorwicklung der Synchronmaschine angelegt werden. In der Regel fließen dadurch in der Statorwicklung Wechselströme, welche ein magnetisches Drehfeld hervorrufen. Das von dem magnetischen Drehfeld auf den Rotor der Synchronmaschine ausgeübte Drehmoment ist nach Betrag und Vorzeichen nicht nur von dem magnetischen Drehfeld als solchem, sondern zusätzlich auch von der momentanen Drehstellung des Rotors abhängig. Für einen ordnungsgemäßen Betrieb der Synchronmaschine ist es daher erforderlich, jederzeit die jeweilige Drehstellung des Rotors zu kennen und die Ansteuerung der Halbleiterventile des Umrichters in Abhängigkeit von der jeweiligen Drehstellung des Rotors der Synchronmaschine vorzunehmen.

Die entsprechende Ansteuerung ist Fachleuten allgemein bekannt. Insbesondere erfolgt innerhalb des Umrichters bzw. dessen Steuereinrichtung eine Umrechnung von Spannungen und Strömen von einem auf den Stator bezogenen, ortsfesten Koordinatensystem (üblicherweise als AB-Koordinatensystem oder als αβ-Koordinatensystem bezeichnet) in ein auf den Rotor bezogenes, mit rotierendes Koordinatensystem (üblicherweise als dq-Koordinatensystem bezeichnet) und umgekehrt. Die Spannungs- und Stromkomponenten im AB-Koordinatensystem sind relativ zueinander elektrisch um 90° phasenversetzt. Auch die Spannungs- und Stromkomponenten im dq-Koordinatensystem sind relativ zueinander elektrisch um 90° phasenversetzt. Die Stromkomponente in q-Richtung wirkt drehmomentbildend. Die Stromkomponente in d-Richtung bewirkt - zumindest theoretisch - kein Drehmoment.

Eine über einen Umrichter gespeiste Synchronmaschine weist in aller Regel einen Lagegeber auf, mittels dessen die mechanische Drehstellung des Rotors ermittelt werden kann. Für die ordnungsgemäße Ansteuerung der Halbleiterventile kommt es zwar nicht so sehr auf die mechanische Drehstellung als solche an, sondern auf die Phasenlage des Rotors relativ zu dem statorfesten Koordinatensystem. Die Phasenlage des Rotors kann jedoch anhand der Drehstellung unmittelbar ermittelt werden.

Im Rahmen der erstmaligen Inbetriebnahme des Antriebs ist es erforderlich, einen Offset des von dem Lagegeber abgegebenen Signals zu ermitteln. Denn anderenfalls könnte beispielsweise nicht gewährleistet werden, dass der Antrieb, wenn er entsprechend einem von dem Antrieb abzugebenden Sollmoment angesteuert wird, tatsächlich auch mit diesem Drehmoment betrieben wird.

Mittels des Prüfverfahrens des Standes der Technik ist es möglich, die Lage einer d-Achse des Rotors und einer zur d-Achse des Rotors elektrisch um 90° phasenversetzten q-Achse des Rotors zu ermitteln.

Für sicherheitsgerichtete Anwendungen wie beispielsweise die Verwendung des Antriebs als Fahrantrieb eines Elektrofahrzeugs genügt diese Ermittlung jedoch nicht Sicherheitserfordernissen. Insbesondere wird bei sicherheitsunkritischen Anwendungen oftmals lediglich die Speisespannung des Umrichters erfasst. Hingegen werden nicht die von den Halbleiterventilen an die Statorwicklung angelegten elektrischen Wechselspannungen als solche erfasst. In diesem Fall ermittelt die Steuereinrichtung, nachdem sie den Strom zu Null geregelt hat, die von den Halbleiterventilen an die Statorwicklung angelegten Wechselspannungen anhand der erfassten Speisespannung und des momentanen Ansteuerzustands der Halbleiterventile. Mögliche Fehlerquellen sind in diesem Fall Abweichungen der (tatsächlichen) Ansteuerung der Halbleiterventile bzw. deren Reaktion auf die Ansteuerung von der der Ermittlung zugrundegelegten Ansteuerung und der der Ermittlung zugrundegelegten Reaktion der Halbleiterventile auf die Ansteuerung. Auch andere Fehlerquellen sind möglich. Bei sicherheitsgerichteten Anwendungen muss jedoch zuverlässig gewährleistet werden können, dass der ermittelte Offset tatsächlich der reale Offset ist, der Offset also fehlerfrei bzw. mit hinreichend kleinem Fehler ermittelt wurde.

Zur zuverlässigen Ermittlung des realen Offsets ist im Stand der Technik beispielsweise bekannt, die von den Halbleiterventilen an die Statorwicklung angelegten Wechselspannungen redundant zu erfassen, weiterhin auch die zugehörigen Wechselströme redundant zu erfassen und weiterhin auch das Ausgangssignal des Lagegebers redundant zu erfassen und mittels einer sicherheitsgerichteten (fehlerredundanten) Steuereinrichtung auszuwerten. Diese Vorgehensweise ist aufwendig und kostenintensiv.

Die Aufgabe der vorliegenden Erfindung besteht darin, Möglichkeiten zu schaffen, mittels derer auf einfache und zuverlässige Weise ermittelt werden kann, ob die ermittelte Lage der d-Achse des Rotors und der q-Achse des Rotors korrekt ist. Insbesondere soll eine redundante Erfassung der an die Statorwicklung angelegten Wechselspannungen nicht erforderlich sein.

Die Aufgabe wird durch ein Prüfverfahren mit den Merkmalen des Anspruchs 1 gelöst. Vorteilhafte Ausgestaltungen des erfindungsgemäßen Prüfverfahrens sind Gegenstand der abhängigen Ansprüche 2 bis 11.

Erfindungsgemäß wird ein Prüfverfahren der eingangs genannten Art dadurch ausgestaltet,
- dass die Steuereinrichtung sodann - d.h. nach dem Ermitteln der d-Achse und der q-Achse - die Halbleiterventile gemäß einem zweiten Ansteuerzustand dynamisch ansteuert,
- dass die Steuereinrichtung bei der Ansteuerung gemäß dem zweiten Ansteuerzustand die Lage der zuvor ermittelten d-Achse und der zuvor ermittelten q-Achse des Rotors berücksichtigt,
- dass die durch die Ansteuerung gemäß dem zweiten Ansteuerzustand bewirkte Reaktion des Antriebs erfasst wird und
- dass unter Berücksichtigung der durch die Ansteuerung gemäß dem zweiten Ansteuerzustand bewirkten Reaktion ein Qualitätsmaß für die ermittelte Lage der d-Achse und der q-Achse des Rotors ermittelt wird.

In einer möglichen grundlegenden ersten Ausgestaltung des erfindungsgemäßen Prinzips ist vorgesehen, dass der zweite Ansteuerzustand derart bestimmt ist, dass ausgehend von der Regelung des an die Synchronmaschine abgegebenen Stromes zu Null ein sich in Richtung der ermittelten q-Achse des Rotors ergebender Strom Null bleibt, sich jedoch in Richtung der ermittelten d-Achse des Rotors ein von Null verschiedener Strom ergibt. Diese Ausgestaltung beruht auf der Erkenntnis, dass - zumindest theoretisch - nur die Stromkomponente in q-Richtung drehmomentbildend wirkt, die Stromkomponente in d-Richtung hingegen kein Drehmoment bewirkt. Wenn daher die Ermittlung der Lage der d-Achse und der q-Achse korrekt vorgenommen wurde, wird durch das Ansteuern der Halbleiterventile gemäß dem zweiten Ansteuerzustand kein Drehmoment bzw. nur ein kleines, aufgrund von Verlusten zu erwartendes Bremsmoment generiert. Demzufolge sollte sich der Betriebszustand der Synchronmaschine und des Umrichters (mit Ausnahme der geänderten Ansteuerung als solcher) nicht oder zumindest nur unwesentlich ändern. Bleibt die Änderung im erwarteten Bereich, kann dies auf hinreichend zuverlässige Weise als korrekte Ermittlung der Lage der d-Achse und der q-Achse gewertet werden. Überschreitet die Änderung hingegen den erwarteten Bereich, liegt ein Fehler vor.

Die durch das Ansteuern der Halbleiterventile entsprechend dem zweiten Ansteuerzustand bewirkte Reaktion, anhand derer das Qualitätsmaß ermittelt wird, kann nach Bedarf bestimmt sein.

Beispielsweise ist es möglich, dass die durch das Ansteuern der Halbleiterventile entsprechend dem zweiten Ansteuerzustand bewirkte Reaktion eine Drehzahl umfasst, die von dem Rotor nach Ablauf einer vorbestimmten Wartezeit ab dem Beginn des zweiten Ansteuerzustands angenommen wird. Denn wie bereits erwähnt, bewirkt in dem Fall, dass die Lage der d-Achse und der q-Achse korrekt ermittelt wurden, die Ansteuerung gemäß dem zweiten Ansteuerzustand kein Drehmoment. Aufgrund dieses Umstands sollte sich die Drehzahl, ausgehend von der Basisdrehzahl, daher nicht oder nur geringfügig ändern.

Im Falle der Auswertung der Drehzahl des Rotors als Reaktion wird also geprüft, ob die Drehzahl des Rotors nach Ablauf der Wartezeit in einem vorbestimmten Drehzahlintervall um eine Prüfdrehzahl herum liegt. Die Prüfdrehzahl kann mit der Basisdrehzahl identisch sein. Alternativ kann die Prüfdrehzahl eine von der Basisdrehzahl verschiedene Drehzahl sein. Durch die Nutzung einer von der Basisdrehzahl verschiedenen Drehzahl als Prüfdrehzahl kann beispielsweise eine Änderung der Drehzahl durch in der Synchronmaschine auftretende Verluste berücksichtigt werden.

Alternativ oder zusätzlich zur Auswertung der Drehzahl des Rotors ist es möglich, dass die durch das Ansteuern der Halbleiterventile entsprechend dem zweiten Ansteuerzustand bewirkte Reaktion eine Leistung umfasst, die dem Umrichter nach dem Beginn des zweiten Ansteuerzustands mittels einer Speisespannung und eines zugehörigen Speisestroms zugeführt wird. Denn aus demselben Grund, aus dem sich keine oder nur eine geringfügige Änderung der Drehzahl ergeben sollte, sollte sich auch (mit Ausnahme der Berücksichtigung von elektrischen und magnetischen Verlusten) keine Änderung der vom Umrichter aufgenommenen und an den Antrieb abgegebenen Leistung ergeben.

Im Falle der Auswertung der Leistung als Reaktion wird also geprüft, ob die vom Umrichter aufgenommene Leistung nach Beginn des zweiten Ansteuerzustands in einem vorbestimmten Leistungsintervall liegt. Analog zum Verhältnis der Prüfdrehzahl zur Basisdrehzahl kann nach Bedarf eine Berücksichtigung von Verlusten erfolgen.

Es ist im Rahmen der grundlegenden ersten Ausgestaltung möglich, dass das Qualitätsmaß ausschließlich anhand der durch das Ansteuern der Halbleiterventile entsprechend dem zweiten Ansteuerzustand bewirkten Reaktion des elektrischen Antriebs ermittelt wird. Eine besonders vorteilhafte und insbesondere robuste Ausgestaltung besteht jedoch darin,
- dass die Steuereinrichtung nach dem Ansteuern der Halbleiterventile gemäß dem zweiten Ansteuerzustand die Halbleiterventile gemäß einem dritten Ansteuerzustand dynamisch ansteuert,
- dass die Steuereinrichtung bei der Ansteuerung gemäß dem dritten Ansteuerzustand die Lage der zuvor ermittelten d-Achse und der zuvor ermittelten q-Achse des Rotors berücksichtigt,
- dass der dritte Ansteuerzustand derart bestimmt ist, dass der sich in Richtung der ermittelten q-Achse des Rotors ergebende Strom Null bleibt, sich jedoch in Richtung der ermittelten d-Achse des Rotors ein von Null verschiedener Strom ergibt, wobei jedoch der sich im zusätzlichen Ansteuerzustand ergebende Strom entgegengesetzt zu dem Strom gerichtet ist, der sich im zweiten Ansteuerzustand ergibt,
- dass die durch das Ansteuern der Halbleiterventile entsprechend dem dritten Ansteuerzustand bewirkte Reaktion des elektrischen Antriebs erfasst wird und
- dass das Qualitätsmaß für die ermittelte Lage der d-Achse und der q-Achse des Rotors unter zusätzlicher Berücksichtigung auch der durch das Ansteuern der Halbleiterventile entsprechend dem dritten Ansteuerzustand bewirkten Reaktion des elektrischen Antriebs ermittelt wird.

Die Magnete des Rotors generieren permanent oder zumindest im Betrieb der Synchronmaschine ein Magnetfeld. Es ist möglich und in der Regel auch bevorzugt, dass der zweite Ansteuerzustand derart bestimmt ist, dass der sich in Richtung der d-Achse des Rotors ergebende Strom entgegen der Richtung dieses Magnetfeldes gerichtet ist. Prinzipiell ist es jedoch ebenso möglich, dass der Strom in Richtung dieses Magnetfeldes gerichtet ist.

Falls die Halbleiterventile zusätzlich zum ersten Ansteuerzustand und zum zweiten Ansteuerzustand auch gemäß dem dritten Ansteuerzustand angesteuert werden, ist vorzugsweise der Betrag des Magnetfeldes, das durch den sich im dritten Ansteuerzustand ergebenden Strom bewirkt wird, im Rahmen von ±10 % ebenso groß wie das Magnetfeld, das durch den sich im zweiten Ansteuerzustand ergebenden Strom bewirkt wird. Insbesondere kann es betragsmäßig exakt so groß sein.

Die Größe des Stromes, der sich im zweiten Ansteuerzustand ergibt, kann nach Bedarf bestimmt sein. Vorzugsweise ist der zweite Ansteuerzustand derart bestimmt, dass der Betrag eines Magnetfeldes, das durch den sich im zweiten Ansteuerzustand ergebenden Strom bewirkt wird, zwischen 20 % und 120 % eines Magnetfeldes ist, das von Magneten des Rotors generiert wird.

In einer möglichen grundlegenden zweiten Ausgestaltung des erfindungsgemäßen Prinzips ist vorgesehen,
- dass der zweite Ansteuerzustand derart bestimmt ist, dass sich in Richtung der ermittelten d-Achse des Rotors ein definierter d-Strom und in Richtung der ermittelten q-Achse des Rotors ein definierter, von Null verschiedener q-Strom ergibt, mittels dessen der Rotor in einer ersten Drehrichtung beschleunigt wird,
- dass die durch das Ansteuern der Halbleiterventile entsprechend dem zweiten Ansteuerzustand bewirkte Reaktion das von einer ersten Anfangsdrehzahl ausgehende Beschleunigungsverhalten des Rotors ist,
- dass die Steuereinrichtung nach dem Ansteuern der Halbleiterventile gemäß dem zweiten Ansteuerzustand die Halbleiterventile gemäß einem dritten Ansteuerzustand dynamisch ansteuert,
- dass die Steuereinrichtung bei der Ansteuerung gemäß dem dritten Ansteuerzustand die Lage der zuvor ermittelten d-Achse und der zuvor ermittelten q-Achse des Rotors berücksichtigt,
- dass der dritte Ansteuerzustand derart bestimmt ist, dass sich in Richtung der ermittelten d-Achse des ein definierter d-Strom und in Richtung der ermittelten q-Achse des Rotors ein definierter, von Null verschiedener q-Strom ergibt, mittels dessen der Rotor entgegengesetzt zur ersten Drehrichtung beschleunigt wird,
- dass der Strom in Richtung der ermittelten q-Achse des Rotors für den dritten Ansteuerzustand betragsmäßig gleich dem Strom in Richtung der ermittelten q-Achse des Rotors für den zweiten Ansteuerzustand ist, jedoch das umgekehrte Vorzeichen aufweist und der Strom in Richtung der ermittelten d-Achse des Rotors für den zweiten und den dritten Ansteuerzustand sowohl den gleichen Betrag als auch das gleiche Vorzeichen aufweist,
- dass die durch das Ansteuern der Halbleiterventile entsprechend dem dritten Ansteuerzustand bewirkte Reaktion das von einer zweiten Anfangsdrehzahl ausgehende Beschleunigungsverhalten des Rotors ist,
- dass die Drehbewegungen gemäß der ersten und der zweiten Anfangsdrehzahl entgegengesetzt gerichtet sind und die erste und die zweite Anfangsdrehzahl betragsmäßig gleich groß sind und
- dass das Qualitätsmaß für die ermittelte Lage der d-Achse und der q-Achse des Rotors unter zusätzlicher Berücksichtigung auch der durch das Ansteuern der Halbleiterventile entsprechend dem dritten Ansteuerzustand bewirkten Reaktion des elektrischen Antriebs ermittelt wird.

Diese Ausgestaltung ist insbesondere dann von Vorteil, wenn die elektrische Maschine ein nennenswertes Reluktanzmoment aufweist. Im Rahmen der Beaufschlagung mit entgegengesetzt gerichteten, gleich großen q-Strömen und gleich gerichteten, gleich großen d-Strömen bei zugleich entgegengesetzt gerichteter Drehrichtung sollte sich auch bei einem nennenswerten Reluktanzmoment eine gleichartige Reaktion ergeben. Sind die Reaktionen verschieden voneinander, kann dies als fehlerhafte Bestimmung des Offsets gewertet werden.

Der q-Strom muss im Rahmen der genannten Ausgestaltung sowohl im zweiten als auch im dritten Ansteuerzustand von Null verschieden sein. Der d-Strom hingegen muss nur sowohl den gleichen Betrag als auch das gleiche Vorzeichen aufweisen. Diese Bedingung ist auch dann erfüllt, wenn der d-Strom sowohl im zweiten als auch im dritten Ansteuerzustand den Wert Null aufweist.

Vorzugsweise umfassen die Reaktionen jeweils mehrere Teilreaktionen, wobei Drehzahlbereiche der Teilreaktionen der durch das Ansteuern der Halbleiterventile entsprechend dem zweiten Ansteuerzustand bewirkten Reaktion mit Drehzahlbereichen der Teilreaktionen der durch das Ansteuern der Halbleiterventile entsprechend dem dritten Ansteuerzustand bewirkten Reaktion betragsmäßig miteinander korrespondieren. Dadurch kann nicht nur die globale Reaktion über den gesamten, von der jeweiligen Anfangsdrehzahl ausgehenden Drehzahlbereich ausgewertet werden, sondern auch die Detail-Reaktionen innerhalb der einzelnen Drehzahlbereiche.

Es ist möglich, dass die Steuereinrichtung zur Ermittlung der von den Halbleiterventilen an die Statorwicklung angelegten Wechselspannungen die von den Halbleiterventilen an die Statorwicklung angelegten Wechselspannungen messtechnisch erfasst. In diesem Fall ist es im Gegensatz zu den Vorgehensweisen des Standes der Technik jedoch ausreichend, eine einfache, nicht redundante Erfassung vorzunehmen. Alternativ ist es möglich, dass die Steuereinrichtung lediglich eine Speisespannung des Umrichters, nicht aber die von den Halbleiterventilen an die Statorwicklung angelegten elektrischen Wechselspannungen als solche erfasst. In diesem Fall ermittelt die Steuereinrichtung die von den Halbleiterventilen an die Statorwicklung angelegten Wechselspannungen anhand der erfassten Speisespannung und des Ansteuerzustands der Halbleiterventile, bei dem der Strom zu Null geregelt ist.

Die Basisdrehzahl sollte einen nennenswerten Wert aufweisen. Insbesondere kann die Basisdrehzahl zwischen 2.000 und 10.000 Umdrehungen/min liegen, beispielsweise bei etwa 5.000 Umdrehungen/min.

Die Aufgabe wird weiterhin durch ein Steuerprogramm mit den Merkmalen des Anspruchs 12 gelöst. Vorteilhafte Ausgestaltungen des erfindungsgemäßen Steuerprogramms sind Gegenstand der abhängigen Ansprüche 13 bis 21.

Erfindungsgemäß wird ein Steuerprogramm der eingangs genannten Art dadurch ausgestaltet, dass die Abarbeitung des Maschinencodes durch die Steuereinrichtung zusätzlich bewirkt, dass die Steuereinrichtung automatisch - sodann - d.h. nach dem Ermitteln der Lage der d-Achse und der q-Achse - die Halbleiterventile gemäß einem zweiten Ansteuerzustand dynamisch ansteuert, wobei die Steuereinrichtung bei der Ansteuerung gemäß dem zweiten Ansteuerzustand die Lage der zuvor ermittelten d-Achse und der zuvor ermittelten q-Achse des Rotors berücksichtigt.

Das Erfassen der durch das Ansteuern der Halbleiterventile entsprechend dem zweiten Ansteuerzustand bewirkten Reaktion des elektrischen Antriebs kann ebenfalls durch die Abarbeitung des Maschinencodes durch die Steuereinrichtung in automatisierter Weise erfolgen. Alternativ ist es jedoch ebenso möglich, die Reaktion anderweitig zu erfassen, beispielsweise intellektuell oder durch eine eigene, von der Steuereinrichtung verschiedene Auswertungseinrichtung.

Ebenso kann auch das Ermitteln des Qualitätsmaßes für die ermittelte Lage der d-Achse und der q-Achse des Rotors durch die Abarbeitung des Maschinencodes durch die Steuereinrichtung in automatisierter Weise erfolgen. Alternativ ist es jedoch ebenso möglich, dass die Ermittlung des Qualitätsmaßes anderweitig erfolgt, beispielsweise intellektuell oder durch eine eigene, von der Steuereinrichtung verschiedene Auswertungseinrichtung.

Im Übrigen korrespondieren die vorteilhaften Ausgestaltungen des Steuerprogramms im Wesentlichen mit denen des Prüfverfahrens.

Die Aufgabe wird weiterhin durch eine Steuereinrichtung mit den Merkmalen des Anspruchs 22 gelöst. Erfindungsgemäß ist die Steuereinrichtung mit einem erfindungsgemäßen Computerprogramm programmiert.

Die Aufgabe wird weiterhin durch einen Umrichter mit den Merkmalen des Anspruchs 23 gelöst. Erfindungsgemäß weist der Umrichter eine erfindungsgemäße Steuereinrichtung auf.

Die Aufgabe wird weiterhin durch einen elektrischen Antrieb mit den Merkmalen des Anspruchs 24 gelöst. Erfindungsgemäß weist der Antrieb einen erfindungsgemäßen Umrichter auf.

Die Aufgabe wird weiterhin durch ein Elektrofahrzeug mit den Merkmalen des Anspruchs 25 gelöst. Erfindungsgemäß weist das Elektrofahrzeug als Fahrantrieb mindestens einen erfindungsgemäßen elektrischen Antrieb auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Elektrofahrzeug,
- FIG 2: einen elektrischen Antrieb,
- FIG 3: ein Ablaufdiagramm,
- FIG 4: einen Drehzahlverlauf,
- FIG 5: einen Magnetisierungsverlauf,
- FIG 6: einen Leistungsverlauf,
- FIG 7: ein Ablaufdiagramm,
- FIG 8: einen Drehzahlverlauf,
- FIG 9: ein Ablaufdiagramm,
- FIG 10 und 11: Drehzahlverläufe,
- FIG 12 und 13: mögliche Ausgestaltungen einer Spannungserfassung und
- FIG 14: einen Ausschnitt der Ablaufdiagramme von FIG 3, 7 und 9.

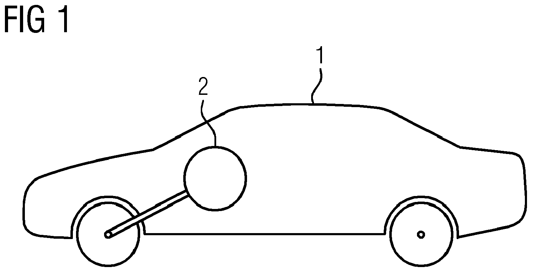

Gemäß FIG 1 weist ein Elektrofahrzeug 1 mindestens einen elektrischen Antrieb 2 auf. Das Elektrofahrzeug 1 ist entsprechend der Darstellung in FIG 1 ein Elektroauto. Es könnte jedoch auch als elektrisch angetriebenes Motorrad, elektrisch angetriebenes Flugzeug (einschließlich Helikopter) oder als elektrisch angetriebenes Wasserfahrzeug ausgebildet sein. Auch ist es möglich, dass das Elektrofahrzeug 1 schienengebunden ist.

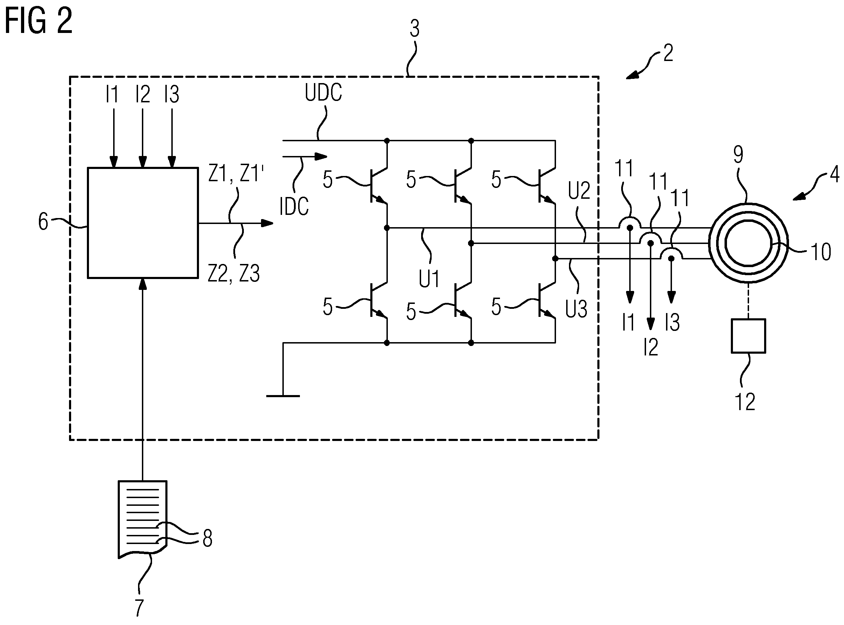

Der elektrische Antrieb 2 weist gemäß FIG 2 einen Umrichter 3 und eine elektrische Maschine 4 auf. Die elektrische Maschine 4 ist als Synchronmaschine ausgebildet. In der Regel ist die elektrische Maschine 4 als permanenterregte Synchronmaschine ausgebildet. Sie kann jedoch auch als elektrisch erregte Synchronmaschine ausgebildet sein. In seltenen Einzelfällen ist es auch möglich, dass die elektrische Maschine 4 als Reluktanzmaschine ausgebildet ist. Die elektrische Maschine 4 wird über den Umrichter 3 gespeist.

Der Umrichter 3 weist Halbleiterventile 5 auf. Die Halbleiterventile 5 werden über eine Speisespannung UDC mit elektrischer Energie versorgt. Die Speisespannung UDC ist in der Regel eine Gleichspannung, beispielsweise eine Zwischenkreisspannung. Die Halbleiterventile 5 können beispielsweise entsprechend der Darstellung in FIG 2 als IGBTs oder als MOSFETs ausgebildet sein. Auch andere Ausgestaltungen, beispielsweise als GTOs, sind möglich. Die Halbleiterventile 5 werden von einer Steuereinrichtung 6 des Umrichters 3 geschaltet. Entsprechend dem jeweiligen Ansteuerzustand der Halbleiterventile 5 werden von den Halbleiterventilen 5 Wechselspannungen U1, U2, U3 eines Drehspannungssystems an die Synchronmaschine 4 ausgegeben.

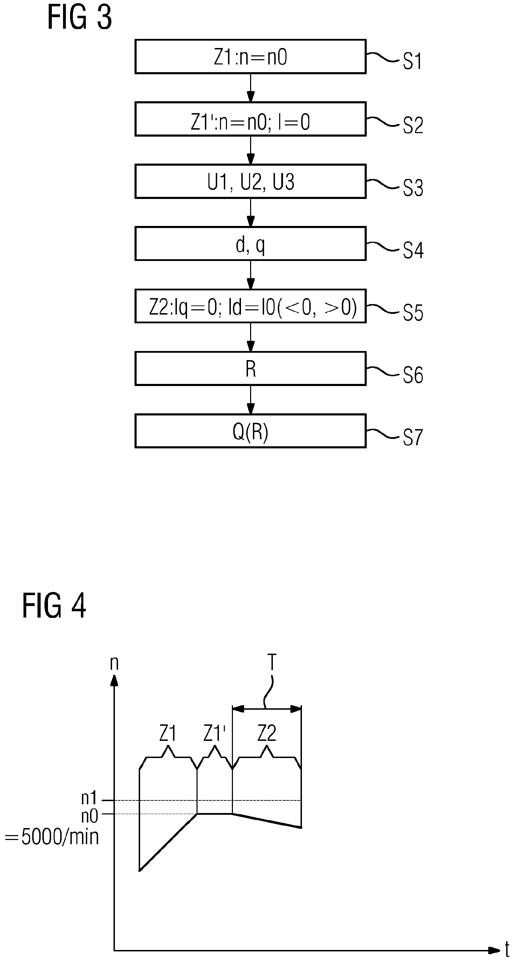

Die Steuereinrichtung 6 ist mit einem Computerprogramm 7 programmiert. Das Computerprogramm 7 umfasst Maschinencode 8, der von der Steuereinrichtung 6 unmittelbar abarbeitbar ist. Die Abarbeitung des Maschinencodes 8 bewirkt, dass die Steuereinrichtung 6 automatisch ein nachfolgend in Verbindung mit FIG 3 näher erläutertes Prüfverfahren für den Antrieb 2 ausführt.

Gemäß FIG 3 steuert die Steuereinrichtung 6 zunächst in einem Schritt S1 die Halbleiterventile 5 des Umrichters 3 gemäß einem ersten Ansteuerzustand Z1 dynamisch an. Aufgrund der Ansteuerung entsprechend dem ersten Ansteuerzustand Z1 legen die Halbleiterventile 5 an eine Statorwicklung 9 der Synchronmaschine 4 die elektrischen Wechselspannungen U1, U2, U3 an.

FIG 4 zeigt die Drehzahl n des Rotors 10 der Synchronmaschine 4 als Funktion der Zeit t. Entsprechend der Darstellung in FIG 4 ist der erste Ansteuerzustand Z1 derart bestimmt, dass der Rotor 10 mit einer Basisdrehzahl n0 rotiert. Falls zu Beginn der Ansteuerung entsprechend dem ersten Ansteuerzustand Z1 die Drehzahl n von der Basisdrehzahl n0 verschieden ist, wird durch die Ansteuerung entsprechend dem ersten Ansteuerzustand Z1 die Drehzahl n auf den Wert der Basisdrehzahl n0 eingestellt. Die Basisdrehzahl n0 liegt entsprechend der Darstellung in FIG 4 in der Regel zwischen 2.000 und 10.000 Umdrehungen/min, insbesondere zwischen 4.000 und 6.000 Umdrehungen/min, beispielsweise bei ca. 5.000 Umdrehungen/min. Sie kann jedoch auch einen anderen Wert aufweisen.

Wenn die Basisdrehzahl n0 eingestellt ist, regelt die Steuereinrichtung 6, ausgehend vom ersten Ansteuerzustand Z1, in einem Schritt S2 den von den Halbleiterventilen 5 an die Synchronmaschine 4 abgegebenen Strom I zu Null. Die Basisdrehzahl n0 wird im Rahmen des Schrittes S2 beibehalten. Der entsprechende Ansteuerzustand ist in FIG 3 mit dem Bezugszeichen Z1' versehen. Die Regelung des Stromes I zu Null ist möglich, weil die Ströme I1, I2, I3 mittels entsprechender Sensoren 11 erfasst werden und die korrespondierenden Sensorsignale der Steuereinrichtung 6 zugeführt werden.

Der Rotor 10 weist eine d-Achse und eine q-Achse auf. Die q-Achse ist relativ zur d-Achse elektrisch um 90° phasenversetzt. Ein in Richtung der q-Achse fließender Strom Iq wirkt drehmomentbildend, ein in Richtung der d-Achse fließender Strom Id bewirkt kein Drehmoment. Dies ist Fachleuten bekannt. Es ist möglich, dass im Rahmen der Ausführung der Schritte S1 und S2 die (aufgrund des Umstands, dass der Rotor 10 mit der Drehzahl n rotiert) zeitveränderliche Lage der d-Achse und der q-Achse des Rotors 10 noch nicht exakt, sondern nur ungefähr bekannt sind. Dies ist im Rahmen der Ausführung der Schritte S1 und S2 jedoch tolerierbar, da es zunächst nur darauf ankommt, den Rotor 10 überhaupt in Rotation zu versetzen.

In dem nun erreichten Zustand ermittelt die Steuereinrichtung 6 in einem Schritt S3 die von den Halbleiterventilen 5 an die Statorwicklung 9 angelegten Wechselspannungen U1, U2, U3. Sodann ermittelt die Steuereinrichtung 6 anhand der Wechselspannungen U1, U2, U3 in einem Schritt S4 die Lage der d-Achse und der q-Achse des Rotors 10. Auch diese Vorgehensweise ist Fachleuten bekannt.

Im Prinzip ist es nunmehr möglich, die Ansteuerung der Halbleiterventile 5 dadurch zu optimieren, dass im Rahmen der Ansteuerung der Halbleiterventile 5 die ermittelte Lage der d-Achse und der q-Achse des Rotors 10 berücksichtigt wird. Insbesondere ist durch die bisher erläuterte Vorgehensweise (ergänze: einmalig) ein Offset ermittelbar, um den ein Ausgangssignal eines Lagegebers 12 korrigiert werden muss, um jederzeit die Lage der d-Achse und der q-Achse des Rotors 10 exakt ermitteln zu können. Der Offset kann beispielsweise innerhalb der Steuereinrichtung 6 in einem Remanentspeicher hinterlegt werden und bei jeder späteren Ansteuerung der Halbleiterventile 5 berücksichtigt werden.

Für manche Anwendungen ist diese Vorgehensweise auch völlig ausreichend. Für andere Anwendungen hingegen - beispielsweise für die eingangs erläuterte Verwendung des elektrischen Antriebs 2 als Fahrantrieb für ein Elektrofahrzeug 1 - muss mit erhöhter Zuverlässigkeit gewährleistet werden können, dass die im Rahmen des Schrittes S4 ermittelte Lage der d-Achse und der q-Achse des Rotors 10 korrekt ist. Denn anderenfalls könnte - beispielsweise - nicht exakt genug ermittelt werden, welche Ansteuerung erforderlich ist, damit der elektrische Antrieb 2 ein definiertes Drehmoment aufbringt. Um diese erhöhte Zuverlässigkeit zu gewährleisten, sind erfindungsgemäß zusätzlich zu den Schritten S1 bis S4 Schritte S5 bis S7 vorhanden.

Im Schritt S5 steuert die Steuereinrichtung 6 die Halbleiterventile 5 gemäß einem zweiten Ansteuerzustand Z2 dynamisch an. Die Steuereinrichtung 6 berücksichtigt bei der Ansteuerung gemäß dem zweiten Ansteuerzustand Z2 die Lage der zuvor ermittelten d-Achse und der zuvor ermittelten q-Achse des Rotors 10. Sodann wird in einem Schritt S6 eine Reaktion R des elektrischen Antriebs 2 erfasst. Die Reaktion R wird durch das Ansteuern der Halbleiterventile 5 entsprechend dem zweiten Ansteuerzustand Z2 bewirkt. Sodann wird in einem Schritt S7 unter Berücksichtigung der bewirkten Reaktion R ein Qualitätsmaß Q für die im Schritt S4 ermittelte Lage der d-Achse und der q-Achse des Rotors 10 ermittelt.

Es ist möglich, dass die Schritte S6 und S7 nicht von der Steuereinrichtung 6, sondern beispielsweise von einem Menschen oder von einer von der Steuereinrichtung 6 verschiedenen Auswertungseinrichtung ausgeführt werden. Es ist auch möglich, dass zwar der Schritt S6, nicht aber der Schritt S7 von der Steuereinrichtung 6 ausgeführt wird, dass also der Schritt S7 beispielsweise von einem Menschen oder von einer von der Steuereinrichtung 6 verschiedenen Auswertungseinrichtung ausgeführt wird. Vorzugsweise werden die Schritte S6 und S7 jedoch - aufgrund der Programmierung mit dem Computerprogramm 7 - ebenfalls von der Steuereinrichtung 6 ausgeführt.

Der zweite Ansteuerzustand Z2 kann gemäß einer ersten Ausgestaltung beispielsweise - ausgehend von der Regelung des an die Synchronmaschine 4 abgegebenen Stromes zu Null - derart bestimmt sein, dass ein sich in Richtung der im Schritt S4 ermittelten q-Achse des Rotors 10 ergebender Strom Iq Null bleibt, sich jedoch in Richtung der im Schritt S4 ermittelten d-Achse des Rotors 10 ein von Null verschiedener Strom Id ergibt. Selbstverständlich werden im Rahmen des Schrittes S5 die Lage der q-Achse des Rotors 10 und die Lage der d-Achse des Rotors 10 dynamisch entsprechend der jeweiligen Drehzahl n fortgeschrieben.

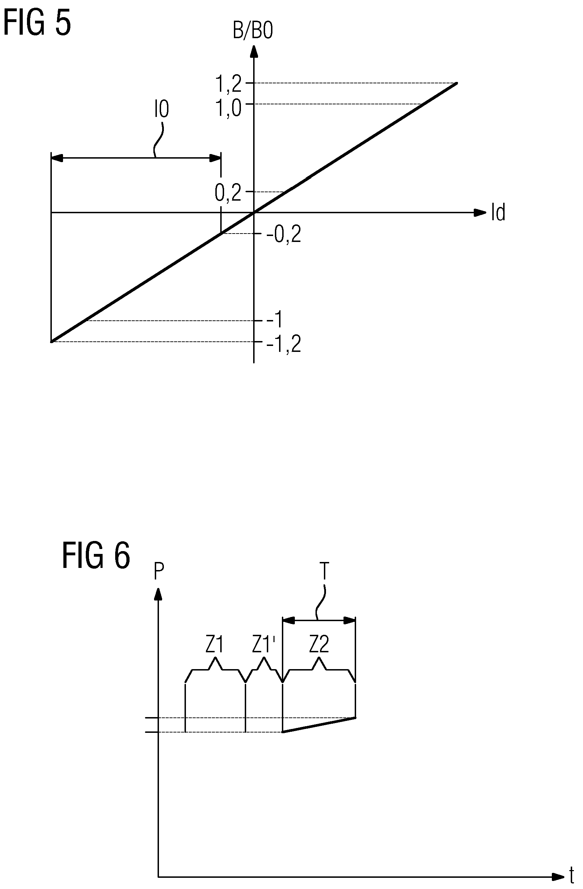

Der Strom Id in Richtung der d-Achse weist in diesem Fall also einen Wert I0 auf. Vorzugsweise ist der Wert I0 negativ. Der Strom Id bewirkt also entsprechend der Darstellung in FIG 5 ein Magnetfeld B, das entgegen der Richtung des Magnetfeldes B0 gerichtet ist, das von Magneten des Rotors 10 generiert wird. Alternativ könnte der Wert I0 jedoch ebenso positiv sein. In diesem Fall wäre das vom Strom Id bewirkte Magnetfeld B in Richtung des Magnetfeldes B0 gerichtet. Analog zum Vorzeichen kann auch die Größe des Stromes I0 nach Bedarf gewählt sein. Vorzugsweise ist der Strom I0 jedoch entsprechend der Darstellung in FIG 5 derart bestimmt, dass das durch den Strom Id bewirkte Magnetfeld B zwischen 20 % und 120 % des Magnetfeldes B0 liegt.

Die Ansteuerung des Schrittes S5 wird - siehe auch die Darstellungen in den FIG 4 und 6 - für eine vorbestimmte Wartezeit T beibehalten. Die Wartezeit T kann beispielsweise im Bereich von 1 s bis 10 s liegen.

Die Reaktion R kann beispielsweise entsprechend der Darstellung in FIG 4 darin bestehen, dass der Rotor 10 bei Ablauf der Wartezeit T mit einer neuen Drehzahl n rotiert. In diesem Fall wird im Rahmen der Ermittlung des Qualitätsmaßes Q geprüft, ob die neue Drehzahl n, mit der der Rotor 10 bei Ablauf der Wartezeit T rotiert, in einem vorbestimmten Bereich um eine Prüfdrehzahl n1 herum liegt. Die Prüfdrehzahl n1 kann mit der Basisdrehzahl n0 identisch sein. Alternativ kann sie - in der Regel geringfügig - unterhalb der Basisdrehzahl n0 liegen. In seltenen Fällen kann die Prüfdrehzahl n1 auch geringfügig oberhalb der Basisdrehzahl n0 liegen. Diese Vorgehensweise - d.h. das Auswerten der Drehzahl n - ist insbesondere dann von Vorteil, wenn der Rotor 10 nicht mit einer Last verbunden ist bzw. nur mit einer relativ kleinen Last verbunden ist, so dass sich eine Änderung des Drehmoments rasch auch in einer Änderung der Drehzahl n niederschlägt.

Alternativ kann die Reaktion R beispielsweise entsprechend der Darstellung in FIG 6 darin bestehen, dass die Leistung P erfasst wird, die dem Umrichter 3 (genauer: den Halbleiterventilen 5) während oder nach Ablauf der Wartezeit T zugeführt wird. Für die Erfassung der Leistung P werden in der Regel die Speisespannung UDC und ein zugehöriger Speisestrom IDC erfasst und entsprechende Messwerte der Steuereinrichtung 6 zugeführt. In diesem Fall wird im Rahmen der Ermittlung des Qualitätsmaßes Q geprüft, ob Änderung der Leistungsaufnahme des Umrichters 3 in einem vorbestimmten Bereich um eine Solländerung herum liegt. Die Solländerung kann den Wert 0 aufweisen. Alternativ kann die Solländerung beispielsweise Umrichterverluste sowie elektrische und/oder magnetische Verluste der Synchronmaschine 4 berücksichtigen. Diese Vorgehensweise ist insbesondere dann von Vorteil, wenn der Rotor 10 eine nennenswerte Trägheit aufweist.

Es ist möglich, dass als Reaktion R stets die Drehzahl n erfasst wird. Es ist alternativ möglich, dass als Reaktion R stets die Leistung P erfasst wird. Wiederum alternativ ist es möglich, dass als Reaktion R stets sowohl die Drehzahl n als auch die Leistung P erfasst werden und beide erfasste Größen n, P ausgewertet werden. Wiederum alternativ ist es möglich, dass selektiert wird, welche Größe n, P erfasst und ausgewertet wird bzw. welche Größen n, P erfasst und ausgewertet werden.

Es ist möglich, dass das Qualitätsmaß Q ein kontinuierliches Maß ist oder ein mehrfach abgestuftes Maß ist. Oftmals ist das Qualitätsmaß Q jedoch rein binärer Natur, gibt also lediglich an, ob die Ermittlung der Lage der d-Achse und der q-Achse des Rotors 10 ordnungsgemäß ist oder nicht.

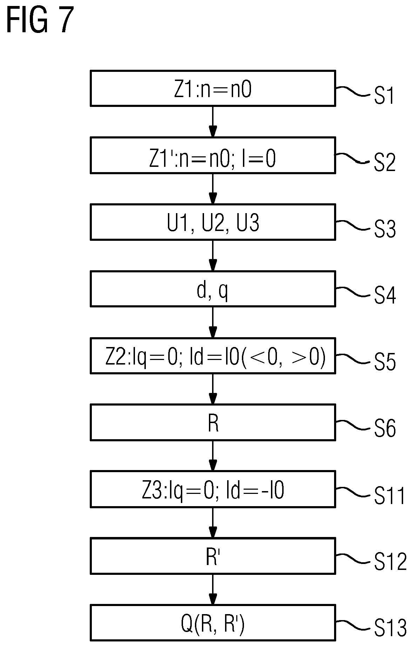

Das Prüfverfahren, so wie es bisher erläutert wurde, arbeitet in vielen Fällen bereits recht gut. Nachfolgend wird in Verbindung mit FIG 7 eine bevorzugte Ausgestaltung des Prüfverfahrens erläutert.

Die Ausgestaltung gemäß FIG 7 baut auf der in Verbindung mit den FIG 4 bis 6 erläuterten Vorgehensweise von FIG 3 auf. Insbesondere umfasst auch die Vorgehensweise gemäß FIG 7 die Schrittes S1 bis S6 von FIG 3. Die Schritte S1 bis S6 werden daher nicht nochmals erläutert.

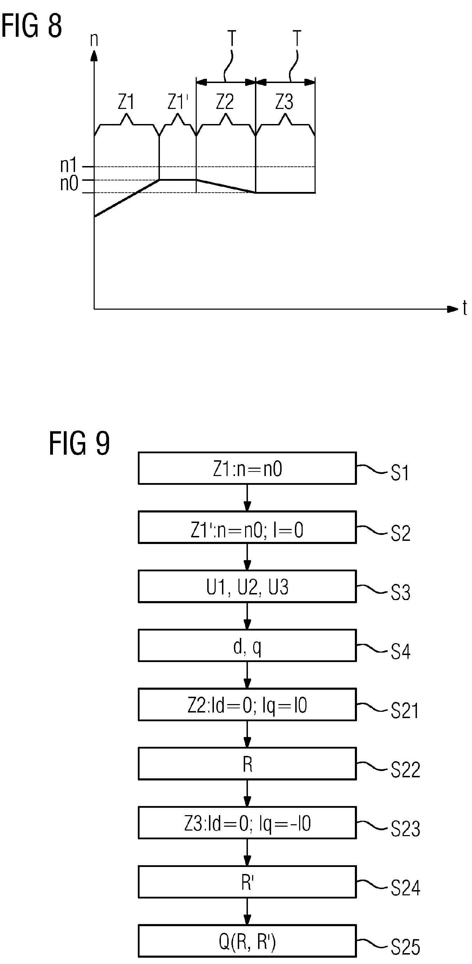

Zusätzlich zu den Schritten S1 bis S7 sind Schritte S11 und S12 vorhanden. Die Schritte S11 und S12 entsprechen inhaltlich den Schritten S5 und S6. Der Unterschied besteht darin, dass im Schritt S11 der in Richtung der d-Achse generierte Strom Id entgegengesetzt zu dem Strom Id ist, der im Rahmen des Schrittes S5 generiert wird. Weiterhin wird im Schritt S12 eine eigene Reaktion R' erfasst. Beispielsweise kann - siehe FIG 8 - erneut die Drehzahl n erfasst werden, die sich nach Ablauf der Wartezeit T (gerechnet ab Beginn des Schrittes S11) ergibt. Ebenso kann analog zu der Ausgestaltung gemäß FIG 6 auch die Leistung P erfasst werden. Dies ist in den FIG nicht mit dargestellt.

Im Rahmen der Vorgehensweise gemäß FIG 7 steuert die Steuereinrichtung 6 somit nach dem Ansteuern der Halbleiterventile 5 gemäß dem zweiten Ansteuerzustand Z2 die Halbleiterventile 5 im Schritt S11 gemäß einem dritten Ansteuerzustand Z3 dynamisch an. Das Ansteuern der Halbleiterventile 5 gemäß dem dritten Ansteuerzustand Z3 kann unmittelbar auf das Ansteuern gemäß dem zweiten Ansteuerzustand Z2 folgen. Alternativ kann das Ansteuern der Halbleiterventile 5 gemäß dem dritten Ansteuerzustand Z3 nach einem erneuten Regeln des an die Synchronmaschine 4 abgegebenen Stromes zu Null erfolgen. Es ist sogar möglich, dass vor dem Ansteuern der Halbleiterventile 5 gemäß dem dritten Ansteuerzustand Z3 erneut die Schritte S1 bis S3 ausgeführt werden.

Der dritte Ansteuerzustand Z3 ist - ebenso wie der zweite Ansteuerzustand Z2 - derart bestimmt, dass der sich in Richtung der im Schritt S4 ermittelten q-Achse des Rotors 10 ergebende Strom Iq Null bleibt. Auch ist der dritte Ansteuerzustand Z3 derart bestimmt, dass sich in Richtung der im Schritt S4 ermittelten d-Achse des Rotors 10 ein von Null verschiedener Strom Id ergibt. Der Unterschied zum zweiten Ansteuerzustand Z2 besteht darin, dass der sich im dritten Ansteuerzustand Z3 ergebende Strom Id entgegengesetzt zu dem Strom Id gerichtet ist, der sich im zweiten Ansteuerzustand Z2 ergibt. Analog zum zweiten Ansteuerzustand Z2 wird jedoch auch hier während oder nach Ablauf der zugehörigen Wartezeit T im Schritt S12 die Reaktion R' erfasst, die durch das Ansteuern der Halbleiterventile 5 entsprechend dem dritten Ansteuerzustand Z3 bewirkt wird.

Der Schritt S7 von FIG 3 ist bei der Ausgestaltung gemäß FIG 7 durch einen Schritt S13 ersetzt. Analog zum Schritt S7 erfolgt im Schritt S13 die Ermittlung des Qualitätsmaßes Q für die ermittelte Lage der d-Achse und der q-Achse des Rotors 10. Der Unterschied zum Schritt S7 besteht darin, dass im Rahmen des Schrittes S7 das Qualitätsmaß Q ausschließlich anhand der Reaktion R ermittelt wird, während im Rahmen des Schrittes S13 bei der Ermittlung des Qualitätsmaßes Q zusätzlich zur Reaktion R auch die Reaktion R' berücksichtigt wird.

Die obenstehend in Verbindung mit den FIG 3 bis 8 erläuterte Vorgehensweise führt in vielen Fällen zu sehr guten Ergebnissen. Alternativ kann statt der Vorgehensweise der FIG 3 bis 8 eine Vorgehensweise ergriffen werden, die nachstehend in Verbindung mit den FIG 9 bis 11 näher erläutert wird.

Auch bei der nunmehr erläuterten Vorgehensweise sind die Schritte S1 bis S4 vorhanden. Die Schritte S1 bis S4 korrespondieren mit denen von FIG 3. Es wird daher auf die dortigen Ausführungen verwiesen.

Die Schritte S5 bis S7 von FIG 3 sind gemäß FIG 9 durch Schritte S21 bis S25 ersetzt.

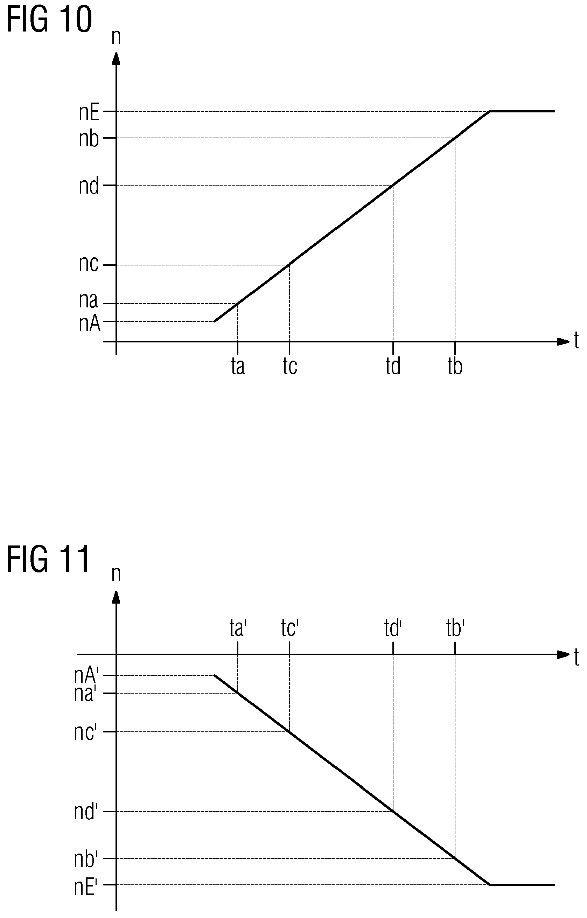

Auch im Schritt S21 steuert die Steuereinrichtung 6 die Halbleiterventile 5 gemäß einem zweiten Ansteuerzustand Z2 dynamisch an. Ebenso wie im Schritt S5 berücksichtigt die Steuereinrichtung 6 bei der Ansteuerung gemäß dem zweiten Ansteuerzustand Z2 die Lage der zuvor ermittelten d-Achse und der zuvor ermittelten q-Achse des Rotors 10. Im Schritt S21 ist der zweite Ansteuerzustand Z2 jedoch derart bestimmt, dass ein sich in Richtung der ermittelten d-Achse des Rotors 10 ergebender Strom Id Null bleibt. In Richtung der ermittelten q-Achse des Rotors 10 ergibt sich durch die Ansteuerung gemäß dem Ansteuerzustand Z2 jedoch ein definierter, von Null verschiedener Strom Iq = I0. Mittels des Stroms Iq wird der Rotor 10 entsprechend der Darstellung in FIG 10 in einer ersten Drehrichtung beschleunigt (Drehzahl n positiv). Als durch das Ansteuern der Halbleiterventile 5 entsprechend dem zweiten Ansteuerzustand Z2 bewirkte Reaktion R des Antriebs 2 wird im Schritt S22 das Beschleunigungsverhalten des Rotors 10 erfasst.

Beispielsweise kann entsprechend der Darstellung in FIG 10 der Rotor 10 zunächst mit einer Anfangsdrehzahl nA rotiert und sodann auf eine Enddrehzahl nE beschleunigt werden. Es können beispielsweise diejenigen Zeiten ta, tb erfasst, zu denen der Rotor 10 Drehzahlwerte na, nb erreicht. Gegebenenfalls können zusätzlich auch für weitere Drehzahlwerte nc, nd die entsprechenden Zeitpunkte tc, td erfasst werden. In analoger Weise könnten, ausgehend von einem Zeitpunkt, zu dem eine vorab definierte Auslösedrehzahl erreicht wird, umgekehrt auch die Drehzahlwerte erfasst werden, die zu bestimmten Zeiten ab diesem Zeitpunkt erreicht werden.

Sodann wird in den Schritten S23 die umgekehrte Vorgehensweise ergriffen. Im Schritt S23 steuert die Steuereinrichtung 6 die Halbleiterventile 5 also gemäß einem dritten Ansteuerzustand Z3 dynamisch an. Ebenso wie im Schritt S21 ist der dritte Ansteuerzustand Z3 derart bestimmt, dass ein sich in Richtung der ermittelten d-Achse des Rotors 10 ergebender Strom Id Null bleibt und sich ein in Richtung der ermittelten q-Achse des Rotors 10 ergebender Strom von Null verschieden ist. Der q-Strom Iq ist jedoch invers zum q-Strom Iq des Schrittes S21. Es gilt nunmehr also Iq = -I0. Weiterhin wird im Rahmen des Schrittes S23 mittels des Stroms Iq der Rotor 10 entsprechend der Darstellung in FIG 11 entgegen der ersten Drehrichtung beschleunigt. Als durch das Ansteuern der Halbleiterventile 5 entsprechend dem dritten Ansteuerzustand Z3 bewirkte Reaktion R' des Antriebs 2 wird im Schritt S24 wieder das Beschleunigungsverhalten des Rotors 10 erfasst.

Beispielsweise kann entsprechend der Darstellung in FIG 11 der Rotor 10 zunächst mit einer Anfangsdrehzahl nA' = -nA rotiert und sodann auf eine Enddrehzahl nE' = -nE beschleunigt werden. Es können beispielsweise diejenigen Zeiten ta', tb' erfasst, zu denen der Rotor 10 Drehzahlwerte na' = -na, nb' = -nb erreicht. Gegebenenfalls können zusätzlich auch für weitere Drehzahlwerte nc' = -nc, nd' = -nd die entsprechenden Zeitpunkte tc', td' erfasst werden. In analoger Weise könnten, ausgehend von einem Zeitpunkt, zu dem eine vorab definierte Auslösedrehzahl erreicht wird, umgekehrt auch die Drehzahlwerte erfasst werden, die zu bestimmten Zeiten ab diesem Zeitpunkt erreicht werden.

Im Schritt S25 ermittelt die Steuereinrichtung 6 ein Qualitätsmaß Q für die ermittelte Lage der d-Achse und der q-Achse des Rotors 10. Die Steuereinrichtung 6 berücksichtigt im Rahmen des Schrittes S25 bei der Ermittlung des Qualitätsmaßes Q zusätzlich zur Reaktion R auch die Reaktion R'. Insbesondere kann die Steuereinrichtung 6 im Rahmen des Schrittes S25 die erfassten Reaktionen R, R' miteinander vergleichen. Sind die Reaktionen R, R' gleich bzw. weichen nur geringfügig voneinander ab, ist dies ein hinreichendes Indiz dafür, dass die Lage der d-Achse und der q-Achse des Rotors 10 korrekt ermittelt wurde.

Im einfachsten Fall werden im Rahmen des Schrittes S25 - beispielsweise - lediglich je ein Zeitintervall aus der Erfassung des Schrittes S22 und ein Zeitintervall aus der Erfassung des Schrittes S24 miteinander verglichen, beispielsweise das Zeitintervall tb-ta mit dem Zeitintervall tb'-ta'. Vorzugsweise werden die Reaktionen R, R' jedoch in mehrere Teilreaktionen aufgeteilt, also beispielsweise für die Reaktion R in die Zeitintervalle tc-ta, td-tc und tb-td und für die Reaktion R' in die Zeitintervalle tc'-ta', td'-tc' und tb'-td'. In diesem Fall umfassen die Reaktionen R, R' also jeweils mehrere miteinander korrespondierende Teilreaktionen, die einzeln miteinander verglichen werden können.

Analog zu den FIG 3 und 7 ist es möglich, dass die Schritte S22, S24 und S25 nicht von der Steuereinrichtung 6, sondern beispielsweise von einem Menschen oder von einer von der Steuereinrichtung 6 verschiedenen Auswertungseinrichtung ausgeführt werden. Es ist auch möglich, dass zwar die Schritte S22 und S24, nicht aber der Schritt S25 von der Steuereinrichtung 6 ausgeführt wird, dass also der Schritt S25 beispielsweise von einem Menschen oder von einer von der Steuereinrichtung 6 verschiedenen Auswertungseinrichtung ausgeführt wird. Vorzugsweise werden die Schritte S22, S24 und S25 jedoch - aufgrund der Programmierung mit dem Computerprogramm 7 - ebenfalls von der Steuereinrichtung 6 ausgeführt. Weiterhin ist es möglich, in den Schritten S21 und S23 zusätzlich zu dem Strom Iq in Richtung der ermittelten q-Achse auch einen Strom Id in Richtung der ermittelten d-Achse vorzusehen. Der Strom Id muss in diesem Fall in den Schritten S21 und S23 jedoch sowohl den gleichen Wert als auch das gleiche Vorzeichen aufweisen.

Die Ermittlung der Wechselspannungen U1, U2, U3 des Schrittes S3 der FIG 3, 7 und 9 kann nach Bedarf ausgestaltet sein.

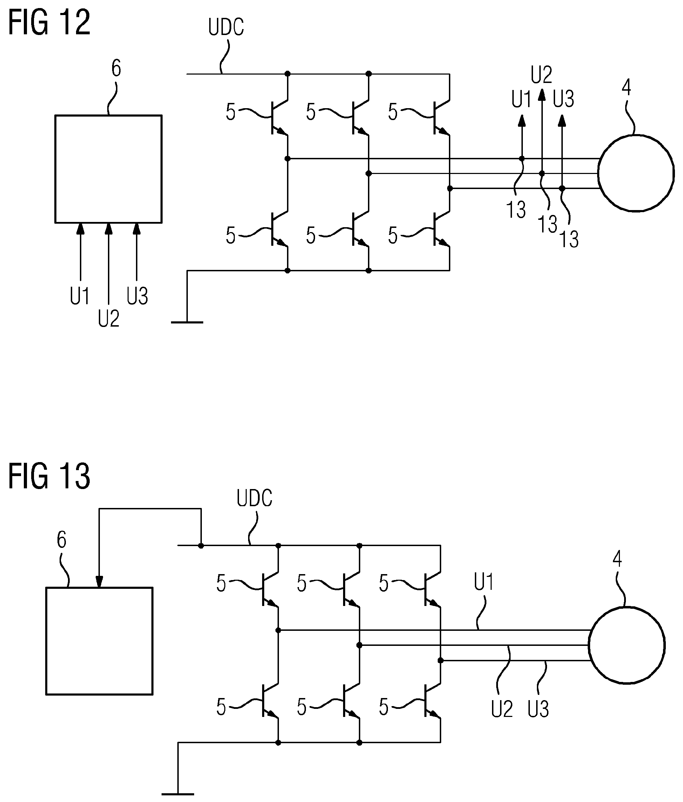

Beispielsweise ist es entsprechend der Darstellung in FIG 12 möglich, dass die Wechselspannungen U1, U2, U3 mittels entsprechender Sensoren 13 direkt messtechnisch erfasst werden und die erfassten Spannungswerte der Steuereinrichtung 6 zugeführt werden. In diesem Fall sind weitergehende Berechnungen zur Ermittlung der Wechselspannungen U1, U2, U3 nicht erforderlich. Der entscheidende Unterschied zum Stand der Technik besteht in diesem Fall darin, dass es im Rahmen der vorliegenden Erfindung ausreichend ist, die Wechselspannungen U1, U2, U3 messtechnisch einfach zu erfassen. Eine redundante Erfassung ist im Gegensatz zum Stand der Technik nicht erforderlich.

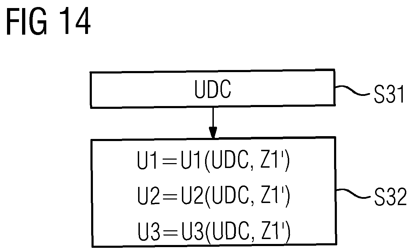

Alternativ ist es entsprechend der Darstellung in FIG 13 möglich, die Wechselspannungen U1, U2, U3 als solche überhaupt nicht direkt zu erfassen, sondern stattdessen lediglich die Speisespannung UDC des Umrichters 3 (also eine Gleichspannung) zu erfassen und der Steuereinrichtung 6 zuzuführen. In diesem Fall ist der Schritt S3 entsprechend der Darstellung in FIG 14 in Form von Schritten S31 und S32 implementiert. Im Schritt S31 nimmt die Steuereinrichtung 6 die erfasste Speisespannung UDC des Umrichters 3 entgegen. Im Schritt S32 ermittelt die Steuereinrichtung 6 in diesem Fall anhand der erfassten Speisespannung UDC und des entsprechenden Ansteuerzustands Z1' der Halbleiterventile 5 die zugehörigen Wechselspannungen U1, U2, U3.

Zusammengefasst betrifft die vorliegende Erfindung somit folgenden Sachverhalt:
Ein elektrischer Antrieb 2 weist einen Umrichter 3 und eine über den Umrichter 3 gespeiste Synchronmaschine 4 auf. Eine Steuereinrichtung 6 des Umrichters 3 steuert Halbleiterventile 5 des Umrichters 3 gemäß einem ersten Ansteuerzustand Z1 dynamisch an, so dass die Halbleiterventile 5 an eine Statorwicklung 9 der Synchronmaschine 4 elektrische Wechselspannungen U1, U2, U3 eines Drehspannungssystems anlegen. Der erste Ansteuerzustand Z1 ist derart bestimmt, dass ein Rotor 10 der Synchronmaschine 4 mit einer Basisdrehzahl n0 rotiert. Die Steuereinrichtung 6 regelt sodann den von den Halbleiterventilen 5 abgegebenen Strom I unter Beibehaltung der Basisdrehzahl n0 zu Null, ermittelt die angelegten Wechselspannungen U1, U2, U3 und ermittelt daraus die Lage einer d-Achse des Rotors 10 und einer zur d-Achse des Rotors 10 elektrisch um 90° phasenversetzten q-Achse des Rotors 10. Sodann steuert die Steuereinrichtung 6 die Halbleiterventile 5 gemäß einem zweiten Ansteuerzustand Z2 dynamisch an. Die Steuereinrichtung 6 berücksichtigt hierbei die Lage der zuvor ermittelten d-Achse und der zuvor ermittelten q-Achse des Rotors 10. Die durch diese Ansteuerung bewirkte Reaktion R des elektrischen Antriebs 2 wird erfasst und unter Berücksichtigung der bewirkten Reaktion R ein Qualitätsmaß Q für die ermittelte Lage der d-Achse und der q-Achse des Rotors 10 ermittelt.

Die vorliegende Erfindung weist viele Vorteile auf. Insbesondere kann auf einfache und genaue Weise - nämlich mittels eines EMK-basierten Verfahrens wie im Stand der Technik auch - durch Auswertung der Wechselspannungen U1, U2, U3 auf hochgenaue Weise die Lage der d-Achse und der q-Achse des Rotors 10 ermittelt werden. Im Gegensatz zum Stand der Technik sind jedoch keine zusätzlichen Sicherheitsmechanismen erforderlich, um etwaige Fehler bei der Spannungsmessung bzw. Spannungsermittlung aufdecken zu können. Weiterhin ist eine im Vergleich zu einer Gleichspannungserfassung (nämlich der Speisespannung UDC) relativ aufwändige Wechselspannungserfassung (nämlich der Wechselspannungen U1, U2, U3) nicht erforderlich. Dennoch kann eine hohe Zuverlässigkeit der ermittelten Lage garantiert werden.

Es ist möglich, dass erfindungsgemäße Prüfverfahren nur bei der erstmaligen Inbetriebnahme des Antriebs 2 auszuführen. Es muss jedoch insbesondere immer dann erneut ausgeführt werden können, wenn die Kombination von Umrichter 3 und Synchronmaschine 4 neu zusammengestellt wird, insbesondere also auch dann, wenn eine der beiden Komponenten 3, 4 ausgetauscht wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Prüfverfahren für einen elektrischen Antrieb (2), der einen Umrichter (3) und eine über den Umrichter (3) gespeiste Synchronmaschine (4) aufweist,
- wobei eine Steuereinrichtung (6) des Umrichters (3) Halbleiterventile (5) des Umrichters (3) gemäß einem ersten Ansteuerzustand (Z1) dynamisch ansteuert, so dass die Halbleiterventile (5) an eine Statorwicklung (9) der Synchronmaschine (4) elektrische Wechselspannungen (U1, U2, U3) eines Drehspannungssystems anlegen,
- wobei der erste Ansteuerzustand (Z1) derart bestimmt ist, dass ein Rotor (10) der Synchronmaschine (4) mit einer Basisdrehzahl (n0) rotiert,
- wobei die Steuereinrichtung (6) sodann ausgehend vom ersten Ansteuerzustand (Z1) den von den Halbleiterventilen (5) an die Synchronmaschine (4) abgegebenen Strom (I) unter Beibehaltung der Basisdrehzahl (n0) zu Null regelt, die von den Halbleiterventilen (5) an die Statorwicklung (9) angelegten Wechselspannungen (U1, U2, U3) ermittelt und anhand der Wechselspannungen (U1, U2, U3) die Lage einer d-Achse des Rotors (10) und einer zur d-Achse des Rotors (10) elektrisch um 90° phasenversetzten q-Achse des Rotors (10) ermittelt,
- wobei die Steuereinrichtung (6) sodann die Halbleiterventile (5) gemäß einem zweiten Ansteuerzustand (Z2) dynamisch ansteuert,
- wobei die Steuereinrichtung (6) bei der Ansteuerung gemäß dem zweiten Ansteuerzustand (Z2) die Lage der zuvor ermittelten d-Achse und der zuvor ermittelten q-Achse des Rotors (10) berücksichtigt,
- wobei die durch die Ansteuerung gemäß dem zweiten Ansteuerzustand (Z2) bewirkte Reaktion des Antriebs (2) erfasst wird und
- wobei unter Berücksichtigung der durch die Ansteuerung gemäß dem zweiten Ansteuerzustand (Z2) bewirkten Reaktion (R) ein Qualitätsmaß (Q) für die ermittelte Lage der d-Achse und der q-Achse des Rotors (10) ermittelt wird.

2. Prüfverfahren nach Anspruch 1,
**dadurch gekennzeichnet, dass** der zweite Ansteuerzustand (Z2) derart bestimmt ist, dass ausgehend von der Regelung des an die Synchronmaschine (4) abgegebenen Stromes (I) zu Null ein sich in Richtung der ermittelten q-Achse des Rotors (10) ergebender Strom (Iq) Null bleibt, sich jedoch in Richtung der ermittelten d-Achse des Rotors (10) ein von Null verschiedener Strom (Id) ergibt.

3. Prüfverfahren nach Anspruch 2,
**dadurch gekennzeichnet, dass** die durch das Ansteuern der Halbleiterventile (5) entsprechend dem zweiten Ansteuerzustand (Z2) bewirkte Reaktion (R) eine Drehzahl (n) umfasst, die von dem Rotor (10) nach Ablauf einer vorbestimmten Wartezeit (T) ab dem Beginn des zweiten Ansteuerzustands (Z2) angenommen wird.

4. Prüfverfahren nach Anspruch 2 oder 3,
**dadurch gekennzeichnet, dass** die durch das Ansteuern der Halbleiterventile (5) entsprechend dem zweiten Ansteuerzustand (Z2) bewirkte Reaktion (R) eine Leistung (P) umfasst, die dem Umrichter (3) nach dem Beginn des zweiten Ansteuerzustands (Z2) mittels einer Speisespannung (UDC) und eines zugehörigen Speisestroms (IDC) zugeführt wird.

5. Prüfverfahren nach Anspruch 2, 3 oder 4,
**dadurch gekennzeichnet,**
- **dass** die Steuereinrichtung (6) nach dem Ansteuern der Halbleiterventile (5) gemäß dem zweiten Ansteuerzustand (Z2) die Halbleiterventile (5) gemäß einem dritten Ansteuerzustand (Z3) dynamisch ansteuert,
- **dass** die Steuereinrichtung (6) bei der Ansteuerung gemäß dem dritten Ansteuerzustand (Z3) die Lage der zuvor ermittelten d-Achse und der zuvor ermittelten q-Achse des Rotors (10) berücksichtigt,
- **dass** der dritte Ansteuerzustand (Z3) derart bestimmt ist, dass ausgehend von der Regelung des an die Synchronmaschine (4) abgegebenen Stromes (I) zu Null der sich in Richtung der ermittelten q-Achse des Rotors (10) ergebende Strom (Iq) Null bleibt, sich jedoch in Richtung der ermittelten d-Achse des Rotors (10) ein von Null verschiedener Strom (Id) ergibt, wobei jedoch der sich im zusätzlichen Ansteuerzustand (Z3) ergebende Strom (Id) entgegengesetzt zu dem Strom (Id) gerichtet ist, der sich im zweiten Ansteuerzustand (Z2) ergibt,
- **dass** die durch das Ansteuern der Halbleiterventile (5) entsprechend dem dritten Ansteuerzustand (Z3) bewirkte Reaktion (R') des elektrischen Antriebs (2) erfasst wird und
- **dass** das Qualitätsmaß (Q) für die ermittelte Lage der d-Achse und der q-Achse des Rotors (10) unter zusätzlicher Berücksichtigung auch der durch das Ansteuern der Halbleiterventile (5) entsprechend dem dritten Ansteuerzustand (Z3) bewirkten Reaktion (R') des elektrischen Antriebs (2) ermittelt wird.

6. Prüfverfahren nach einem der Ansprüche 2 bis 5,
**dadurch gekennzeichnet, dass** der zweite Ansteuerzustand (Z2) derart bestimmt ist, dass der sich in Richtung der d-Achse des Rotors (10) ergebende Strom (Id) in der Richtung eines von Magneten des Rotors (10) generierten Magnetfeldes (B0) oder entgegen der Richtung dieses Magnetfeldes (B0) gerichtet ist.

7. Prüfverfahren nach einem der Ansprüche 2 bis 6,
**dadurch gekennzeichnet, dass** der zweite Ansteuerzustand (Z2) derart bestimmt ist, dass der Betrag eines Magnetfeldes (B), das durch den sich im zweiten Ansteuerzustand (Z2) ergebenden Strom (Id) bewirkt wird, zwischen 20 % und 120 % eines Magnetfeldes (B0) ist, das von Magneten des Rotors (10) generiert wird.

8. Prüfverfahren nach Anspruch 1,
**dadurch gekennzeichnet,**
- **dass** der zweite Ansteuerzustand (Z2) derart bestimmt ist, dass sich in Richtung der ermittelten d-Achse des Rotors (10) ein definierter d-Strom (Id) und in Richtung der ermittelten q-Achse des Rotors (10) ein definierter, von Null verschiedener Strom (Iq) ergibt, mittels dessen der Rotor (10) in einer ersten Drehrichtung beschleunigt wird,
- **dass** die durch das Ansteuern der Halbleiterventile (5) entsprechend dem zweiten Ansteuerzustand (Z2) bewirkte Reaktion (R) das von einer ersten Anfangsdrehzahl (nA) ausgehende Beschleunigungsverhalten des Rotors (10) ist,
- **dass** die Steuereinrichtung (6) nach dem Ansteuern der Halbleiterventile (5) gemäß dem zweiten Ansteuerzustand (Z2) die Halbleiterventile (5) gemäß einem dritten Ansteuerzustand (Z3) dynamisch ansteuert,
- **dass** die Steuereinrichtung (6) bei der Ansteuerung gemäß dem dritten Ansteuerzustand (Z3) die Lage der zuvor ermittelten d-Achse und der zuvor ermittelten q-Achse des Rotors (10) berücksichtigt,
- **dass** der dritte Ansteuerzustand (Z3) derart bestimmt ist, dass sich in Richtung der ermittelten d-Achse des Rotors (10) ein definierter d-Strom (Id) und in Richtung der ermittelten q-Achse des Rotors (10) ein definierter, von Null verschiedener Strom (Iq) ergibt, mittels dessen der Rotor (10) entgegengesetzt zur ersten Drehrichtung beschleunigt wird,
- **dass** der Strom (Iq) in Richtung der ermittelten q-Achse des Rotors (10) für den dritten Ansteuerzustand (Z3) betragsmäßig gleich dem Strom (Iq) in Richtung der ermittelten q-Achse des Rotors (10) für den zweiten Ansteuerzustand (Z2) ist, jedoch das umgekehrte Vorzeichen aufweist und der Strom (Id) in Richtung der ermittelten d-Achse des Rotors (10) für den zweiten und den dritten Ansteuerzustand (Z2, Z3) sowohl den gleichen Betrag als auch das gleiche Vorzeichen aufweist,
- **dass** die durch das Ansteuern der Halbleiterventile (5) entsprechend dem dritten Ansteuerzustand (Z3) bewirkte Reaktion (R') das von einer zweiten Anfangsdrehzahl (nA') ausgehende Beschleunigungsverhalten des Rotors (10) ist,
- **dass** die Drehbewegungen gemäß der ersten und der zweiten Anfangsdrehzahl (nA, nA') entgegengesetzt gerichtet sind und die erste und die zweite Anfangsdrehzahl (nA, nA') betragsmäßig gleich groß sind und
- **dass** das Qualitätsmaß (Q) für die ermittelte Lage der d-Achse und der q-Achse des Rotors (10) unter zusätzlicher Berücksichtigung auch der durch das Ansteuern der Halbleiterventile (5) entsprechend dem dritten Ansteuerzustand (Z3) bewirkten Reaktion (R') des elektrischen Antriebs (2) ermittelt wird.

9. Prüfverfahren nach Anspruch 8,
**dadurch gekennzeichnet, dass** die Reaktionen (R, R') jeweils mehrere Teilreaktionen umfassen, wobei Drehzahlbereiche der Teilreaktionen der durch das Ansteuern der Halbleiterventile (5) entsprechend dem zweiten Ansteuerzustand (Z2) bewirkten Reaktion (R) mit Drehzahlbereichen der Teilreaktionen der durch das Ansteuern der Halbleiterventile (5) entsprechend dem dritten Ansteuerzustand (Z3) bewirkten Reaktion (R') betragsmäßig miteinander korrespondieren.

10. Prüfverfahren nach einem der obigen Ansprüche,
**dadurch gekennzeichnet, dass** die Steuereinrichtung (6) zur Ermittlung der von den Halbleiterventilen (5) an die Statorwicklung (9) angelegten Wechselspannungen (U1, U2, U3)
- entweder die von den Halbleiterventilen (5) an die Statorwicklung (9) angelegten Wechselspannungen (U1, U2, U3) messtechnisch einfach, aber nicht redundant erfasst
- oder lediglich eine Speisespannung (UDC) des Umrichters (3), nicht aber die von den Halbleiterventilen (5) an die Statorwicklung (9) angelegten elektrischen Wechselspannungen (U1, U2, U3) als solche erfasst und die von den Halbleiterventilen (5) an die Statorwicklung (9) angelegten Wechselspannungen (U1, U2, U3) anhand der erfassten Speisespannung (UDC) und des Ansteuerzustands (Z1') der Halbleiterventile (5) ermittelt, bei dem der Strom (I) zu Null geregelt ist.

11. Prüfverfahren nach einem der obigen Ansprüche,
**dadurch gekennzeichnet, dass** die Basisdrehzahl (n0) zwischen 2.000 und 10.000 Umdrehungen/min liegt.

12. Steuerprogramm für eine Steuereinrichtung (6) eines Halbleiterventile (5) umfassenden Umrichters (3), wobei das Steuerprogramm Maschinencode (8) umfasst, der von der Steuereinrichtung (6) unmittelbar abarbeitbar ist, wobei die Abarbeitung des Maschinencodes (8) durch die Steuereinrichtung (6) bewirkt, dass die Steuereinrichtung (6) automatisch
- die Halbleiterventile (5) des Umrichters (3) gemäß einem ersten Ansteuerzustand (Z1) dynamisch ansteuert, so dass die Halbleiterventile (5) an eine Statorwicklung (9) der Synchronmaschine (4) elektrische Wechselspannungen (U1, U2, U3) eines Drehspannungssystems anlegen, wobei der erste Ansteuerzustand (Z1) derart bestimmt ist, dass ein Rotor (10) der Synchronmaschine (4) mit einer Basisdrehzahl (n0) rotiert,
- sodann ausgehend vom ersten Ansteuerzustand (Z1) den von den Halbleiterventilen (5) an die Synchronmaschine (4) abgegebenen Strom (I) unter Beibehaltung der Basisdrehzahl (n0) zu Null regelt, die von den Halbleiterventilen (5) an die Statorwicklung (9) angelegten Wechselspannungen (U1, U2, U3) ermittelt und anhand der Wechselspannungen (U1, U2, U3) die Lage einer d-Achse des Rotors (10) und einer zur d-Achse des Rotors (10) elektrisch um 90° phasenversetzten q-Achse des Rotors (10) ermittelt und
- sodann die Halbleiterventile (5) gemäß einem zweiten Ansteuerzustand (Z2) dynamisch ansteuert, wobei die Steuereinrichtung (6) bei der Ansteuerung gemäß dem zweiten Ansteuerzustand (Z2) die Lage der zuvor ermittelten d-Achse und der zuvor ermittelten q-Achse des Rotors (10) berücksichtigt.

13. Steuerprogramm nach Anspruch 12,
**dadurch gekennzeichnet, dass** die Abarbeitung des Maschinencodes (8) durch die Steuereinrichtung (6) zusätzlich bewirkt, dass die Steuereinrichtung (6) automatisch die durch das Ansteuern der Halbleiterventile (5) entsprechend dem zweiten Ansteuerzustand (Z2) bewirkte Reaktion (R) des elektrischen Antriebs (2) erfasst.

14. Steuerprogramm nach Anspruch 12,
**dadurch gekennzeichnet, dass** die Abarbeitung des Maschinencodes (8) durch die Steuereinrichtung (6) zusätzlich bewirkt, dass die Steuereinrichtung (6) automatisch unter Berücksichtigung der bewirkten Reaktion (R) ein Qualitätsmaß (Q) für die ermittelte Lage der d-Achse und der q-Achse des Rotors (10) ermittelt.

15. Steuerprogramm nach Anspruch 12, 13 oder 14,
**dadurch gekennzeichnet, dass** die Abarbeitung des Maschinencodes (8) durch die Steuereinrichtung (6) zusätzlich bewirkt, dass die Steuereinrichtung (6) die Merkmale von Anspruch 2 implementiert.

16. Steuerprogramm nach Anspruch 15 in Verbindung mit Anspruch 13 oder 14,
**dadurch gekennzeichnet, dass** die Abarbeitung des Maschinencodes (8) durch die Steuereinrichtung (6) zusätzlich bewirkt, dass die Steuereinrichtung (6) die Merkmale von Anspruch 3 und/oder 4 implementiert.

17. Steuerprogramm nach Anspruch 15 oder 16,
**dadurch gekennzeichnet, dass** die Abarbeitung des Maschinencodes (8) durch die Steuereinrichtung (6) zusätzlich bewirkt, dass die Steuereinrichtung (6) nach dem Ansteuern der Halbleiterventile (5) gemäß dem zweiten Ansteuerzustand (Z2) die Halbleiterventile (5) gemäß einem dritten Ansteuerzustand (Z3) dynamisch ansteuert, wobei der dritte Ansteuerzustand (Z3) derart bestimmt ist, dass der sich in Richtung der ermittelten q-Achse des Rotors (10) ergebende Strom (Iq) Null bleibt, sich jedoch in Richtung der ermittelten d-Achse des Rotors (10) ein von Null verschiedener Strom (Id) ergibt, wobei jedoch der sich im dritten Ansteuerzustand (Z3) ergebende Strom (Id) entgegengesetzt zu dem Strom (Id) gerichtet ist, der sich im zweiten Ansteuerzustand (Z2) ergibt.

18. Steuerprogramm nach Anspruch 15, 16 oder 17,
**dadurch gekennzeichnet, dass** die Abarbeitung des Maschinencodes (8) durch die Steuereinrichtung (6) zusätzlich bewirkt, dass die Steuereinrichtung (6) die Merkmale von Anspruch 6 oder 7 implementiert.

19. Steuerprogramm nach Anspruch 12, 13 oder 14,
**dadurch gekennzeichnet, dass** die Abarbeitung des Maschinencodes (8) durch die Steuereinrichtung (6) zusätzlich bewirkt,
- dass der zweite Ansteuerzustand (Z2) derart bestimmt ist, dass sich in Richtung der ermittelten d-Achse des Rotors (10) ein definierter d-Strom (Id) und in Richtung der ermittelten q-Achse des Rotors (10) ein definierter, von Null verschiedener Strom (Iq) ergibt, mittels dessen der Rotor (10) in einer ersten Drehrichtung beschleunigt wird,
- dass die Steuereinrichtung (6) nach dem Ansteuern der Halbleiterventile (5) gemäß dem zweiten Ansteuerzustand (Z2) die Halbleiterventile (5) gemäß einem dritten Ansteuerzustand (Z3) dynamisch ansteuert,
- dass die Steuereinrichtung (6) bei der Ansteuerung gemäß dem dritten Ansteuerzustand (Z3) die Lage der zuvor ermittelten d-Achse und der zuvor ermittelten q-Achse des Rotors (10) berücksichtigt,
- dass der dritte Ansteuerzustand (Z3) derart bestimmt ist, dass sich in Richtung der ermittelten d-Achse des Rotors (10) ein definierter d-Strom (Id) und in Richtung der ermittelten q-Achse des Rotors (10) ein definierter, von Null verschiedener Strom (Iq) ergibt, mittels dessen der Rotor (10) entgegengesetzt zur ersten Drehrichtung beschleunigt wird,
- dass der Strom (Iq) in Richtung der ermittelten q-Achse des Rotors (10) für den dritten Ansteuerzustand (Z3) betragsmäßig gleich dem Strom (Iq) in Richtung der ermittelten q-Achse des Rotors (10) für den zweiten Ansteuerzustand (Z2) ist, jedoch das umgekehrte Vorzeichen aufweist und der Strom (Id) in Richtung der ermittelten d-Achse des Rotors (10) für den zweiten und den dritten Ansteuerzustand (Z2, Z3) sowohl den gleichen Betrag als auch das gleiche Vorzeichen aufweist und
- dass die Drehbewegungen des zweiten und des dritten Ansteuerzustands (Z2, Z3) entgegengesetzt gerichtet sind.

20. Steuerprogramm nach Anspruch 19 in Verbindung mit Anspruch 13 oder 14,
**dadurch gekennzeichnet, dass** die Abarbeitung des Maschinencodes (8) durch die Steuereinrichtung (6) zusätzlich bewirkt, dass die Steuereinrichtung (6) die Merkmale von Anspruch 9 implementiert.

21. Steuerprogramm nach einem der Ansprüche 12 bis 20, **dadurch gekennzeichnet, dass** die Abarbeitung des Maschinencodes (8) durch die Steuereinrichtung (6) zusätzlich bewirkt, dass die Steuereinrichtung (6) die Merkmale von Anspruch 10 oder 11 implementiert.

22. Steuereinrichtung für einen Umrichter (3), wobei die Steuereinrichtung mit einem Computerprogramm (7) nach einem der Ansprüche 12 bis 21 programmiert ist.

23. Umrichter, wobei der Umrichter Halbleiterventile (5) aufweist, von denen Wechselspannungen (U1, U2, U3) eines Drehspannungssystems an eine Synchronmaschine (4) ausgegeben werden, wobei der Umrichter eine Steuereinrichtung (6) nach Anspruch 22 aufweist,

24. Elektrischer Antrieb, wobei der Antrieb einen Umrichter (3) nach Anspruch 23 und eine über den Umrichter (3) gespeiste Synchronmaschine (4) aufweist.

25. Elektrofahrzeug, das als Fahrantrieb mindestens einen elektrischen Antrieb (2) nach Anspruch 24 aufweist.
